# EUROPEAN PATENT SPECIFICATION

(11) **EP 0 822 686 B1**
(45) Date of publication and mention of the grant of the patent: **09.11.2005**
(21) Application number: 97850117.9
(22) Date of filing: 18.07.1997
(51) Int. Cl.: H04L 12/66

(54) **Screening of unfamiliar messages and parameters**
Abfangen von unbekannten Nachrichten und Parametern
Filtrage des messages et paramètres inconnus

(30) Priority: 30.07.1996 SE 9602899
(43) Date of publication of application: 04.02.1998
(73) Proprietor: TELEFONAKTIEBOLAGET LM ERICSSON (publ), 164 83 Stockholm (SE)
(72) Inventor: Hallenstal, Magnus, 183 44 Täby (SE)
(74) Representative: Lövgren, Tage

(56) References cited:
- EP-A- 0 517 534
- EP-A- 0 595 509
- GB-A- 2 268 376
- US-A- 5 062 108

## Description

### TECHNICAL FIELD

The present invention relates to a method and a node for screening out unfamiliar messages and parameters.

### STATE OF THE ART

A telecommunication network consists of amongst others, gateway nodes which have the task of communicating with other surrounding networks. In a gateway node there is a need to be able to check which information is conveyed between different networks via the gateway node. This concerns not least traffic conveyed by ISUP (Integrated Services User Part). ISUP is extremely information rich and exists in a couple of different versions. Each version has furthermore a number of different national and operator specific variants. This means that the risk that unfamiliar messages or parameters come to a gateway node from a surrounding network is large.

There is a possibility in ISUP for the transmitter of a message to set a compatibility parameter. This parameter controls what a node shall do with a message or a parameter which it does not recognize. This means, however, that a long distance operator loses control over which messages and parameters he can convey in his network as he must rely on that those who send messages set the parameters in a correct manner.

For a long distance operator it is especially important to solve this problem. In order to have check on which services the operator wants to convey between two networks, the operator must recognize all the messages and parameters which arrive at the gateway nodes. A contributory reason for wanting to recognize all messages is, for example, to be able to debit for the customer's use of the long distance operator's network. If any of the long distance operator's customers chooses to update his network in order to institute new services then the long distance operator must follow along. To upgrade software in a telecommunication network is a slow process which means that the long distance operator will irremediably fall behind. But not even through upgrading can he be certain to be able to understand and be able to debit for every message and parameter because his customers can have a variation of the protocol which is not available for the long distance operator.

From US 5 062 108 it is known for a system to have stored data in order to identify and process messages. The system determines if the message uses a different number of identifiers. If this is the case then the message is converted to a recognizable form.

In ISUP it is known to take care of unfamiliar messages and parameters. This is done through reading and interpreting a compatibility parameter which is sent with the message. If there is no compatibility parameter then a predetermined action is taken, for example to forward the message or the parameter. This predetermined action applies for all messages or parameters.

Screening of known messages is known.

The patent application GB-A- 2 268 376 disclose a c communication network bridge filter system where a message comprises a header having a source identification field, a destination identification field and a protocol identification field.Each of these fields is 3 bits long. The protocol, source and destination fields are converted to a domain class, also 3 bits long. That is, a maximum of 8 different protocols and domains can be handled.

The patent application EP-A-517 534 disclose a repeater for a local area network that has a plurality of ports and a memory which stores, for each port, a list of permitted or prescribed addresses. The source or destination address contained in each message received at the port is compared with the respective address list and the port is isolated in dependence upon whether or not a match is found. In this way, for example, DTE's on a local segment can be precluded from accessing specified DTE's on other segments.

### DISCLOSURE OF THE INVENTION

The present invention attacks the above problem of how the screening of unfamiliar messages and parameters can take place in a network.

Another problem which the present invention solves is to be able to be paid for unfamiliar services conveyed via a network.

An object with the present invention is consequently to be able to screen and terminate selected unfamiliar messages and parameters.

The above problem with screening of unfamiliar messages and parameters is solved through a special screening method being used when a unfamiliar message or parameter is met with.

The screening method comprises a table with parameters, or message types, destinations and actions. When a parameter or a message is met with which is intended to be conveyed to a destination mentioned in the table then the action indicated in the table is performed. The table is set up and is manipulable by an operator.

An advantage with the present invention is that a network operator gains a check over which messages or parameters are to be conveyed via his network.

Another advantage is that different actions can be taken based on different types of unfamiliar messages and parameters and on the destination of the messages.

Another advantage is that the network operator in a simple manner can adapt his network to new conditions, that is to say new types of unfamiliar messages and parameters.

Another advantage is that the network operator can debit for the use of his network.

The invention will now be described more closely with the help of preferred embodiments and with reference to the appending drawings.

### DESCRIPTION OF THE FIGURES

Figure 1 shows schematically three networks.
Figure 2 shows a flow diagram according to one embodiment of the invention.
Figure 3 shows schematically an ISUP message.
Figure 4 shows a table according to one embodiment of the invention.
Figure 5 shows a flow diagram according to an embodiment of the invention.
Figure 6 shows a table according to one embodiment of the invention.

### PREFERRED EMBODIMENTS

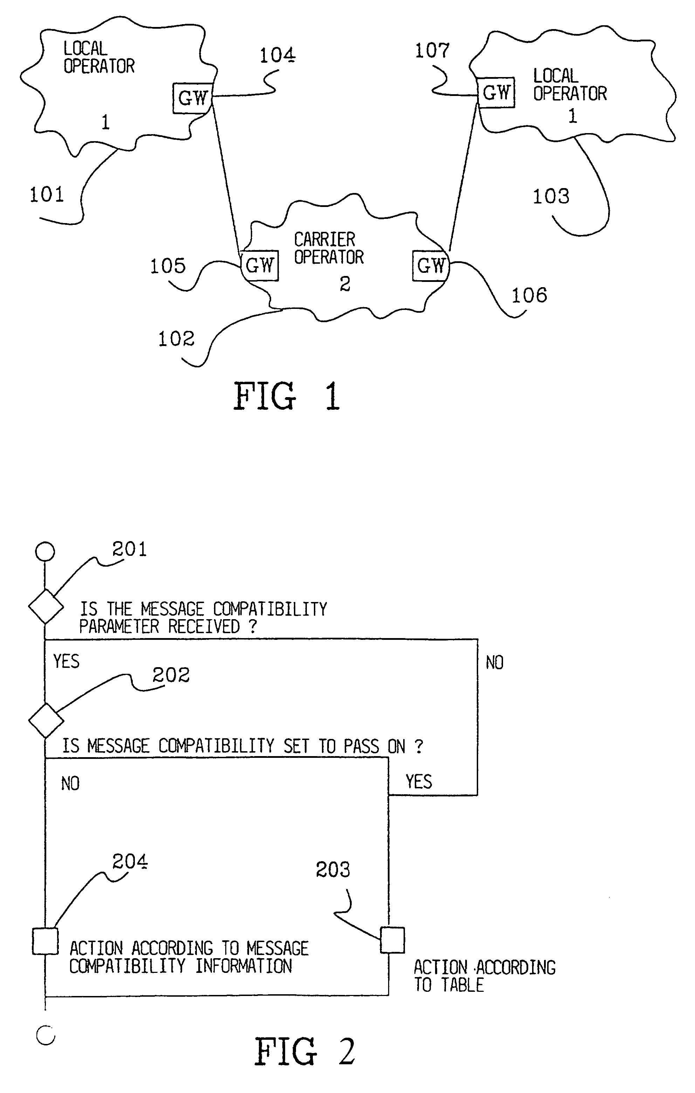

Figure 1 shows a network consisting of a local operator with two separate networks 101 and 103. These networks are joined through a third network 102. In the network 101 a message originates which shall terminate in the network 103. The message passes through a gateway node 104 and arrives at a gateway node 105 in the network 102. In the gateway node 105 the message is unpacked and analyzed. The logic in the gateway node 105 does not recognize the message and a decision must be taken on whether the message shall be forwarded further to the network 103 via the gateway nodes 106 and 107.

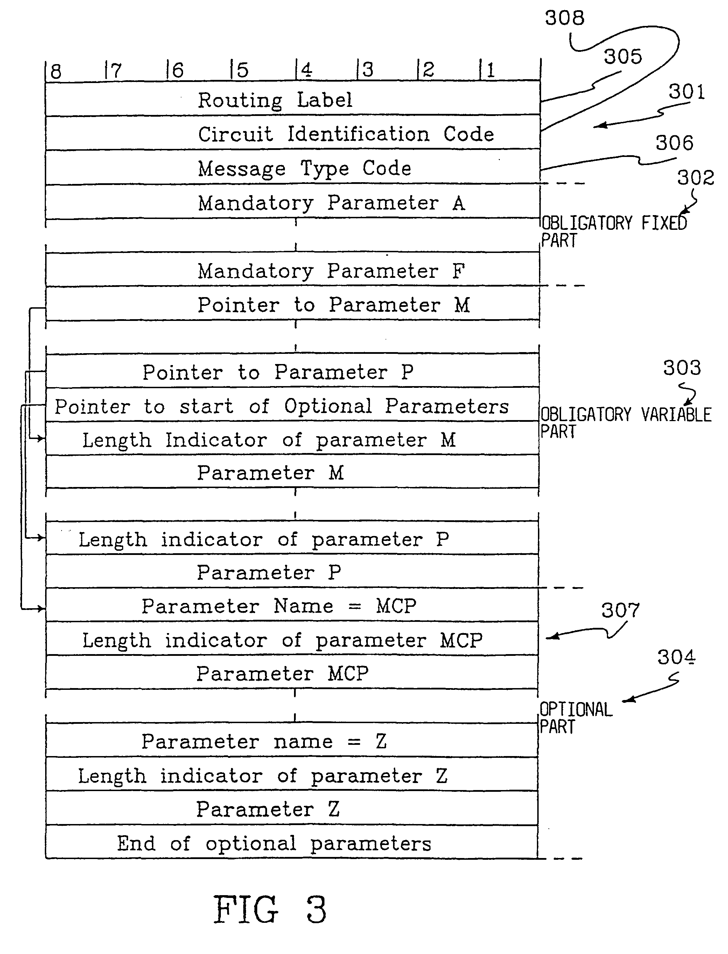

In this embodiment preferably ISUP is described as the network protocol, but the invention functions naturally also for other protocols, for example TUP, MUP etc. Even completely other types of protocol are conceivable, for example TCP/IP, X.25 etc. In Figure 3 an ISUP message is shown schematically. The ISUP message is divided into four parts, a head 301, an obligatory fixed part 302, an obligatory variable part 303 and an optional part 304. Each part is in turn divided into 8 bit fields. In the head are for example routing label 305 and message type code 306. In the optional part there is included amongst others a message compatibility parameter, abbreviated here to MCP 307. MCP is the parameter in ISUP which decides what shall happen with a message if it is not recognized.

In the first ISUP message, IAM (initial adress message) information is sent about the destination for the conversation in the parameter "called party number". In all subsequent messages the message and destination are identified with the help of the parameter "Routing Label" 305 and a parameter "Circuit Identification Code" 308.

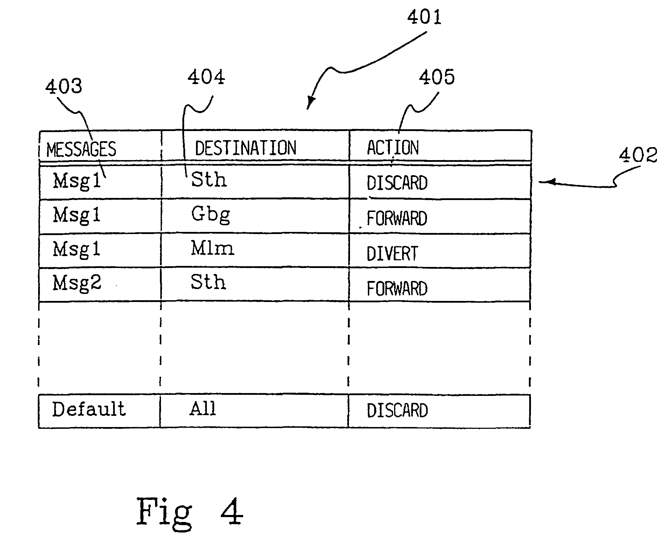

When the message arrives at the gateway node 105 in Figure 1 and the message is not recognized then it is analyzed according to the flow diagram in Figure 2. If the message does not contain any MCP 201 then actions 203 are taken according to a table 401 in Figure 4. In the table 401 there are three fields for every input 402. A field for the type of message 403, a field for the destination for the message 404 and a field for action 405. If the message type 403 and the destination 404 are in the table then the action 405 is taken which is associated with the message type 403 and destination 404. The table can be modified by an operator. In this way new types of messages can be treated in a simple manner through the operator adding them to the table. The table from the beginning is built up by an operator.

In Figure 2 there is further shown that if the message contains an MCP, but the MCP shows that the message shall be forwarded 202, then the action 203 is taken according to the Table 401 in Figure 4. If the MCP is not set so that the message shall be forwarded then the action is taken according to MCP 204. These actions are described in the standardization document ISUP, Q.763. At this stage it is also conceivable that the type of message, destination, action and other interesting traffic information are saved in order to later form the foundation for the debiting. To be able to debit even for unfamiliar messages and parameters is naturally interesting to the highest degree.

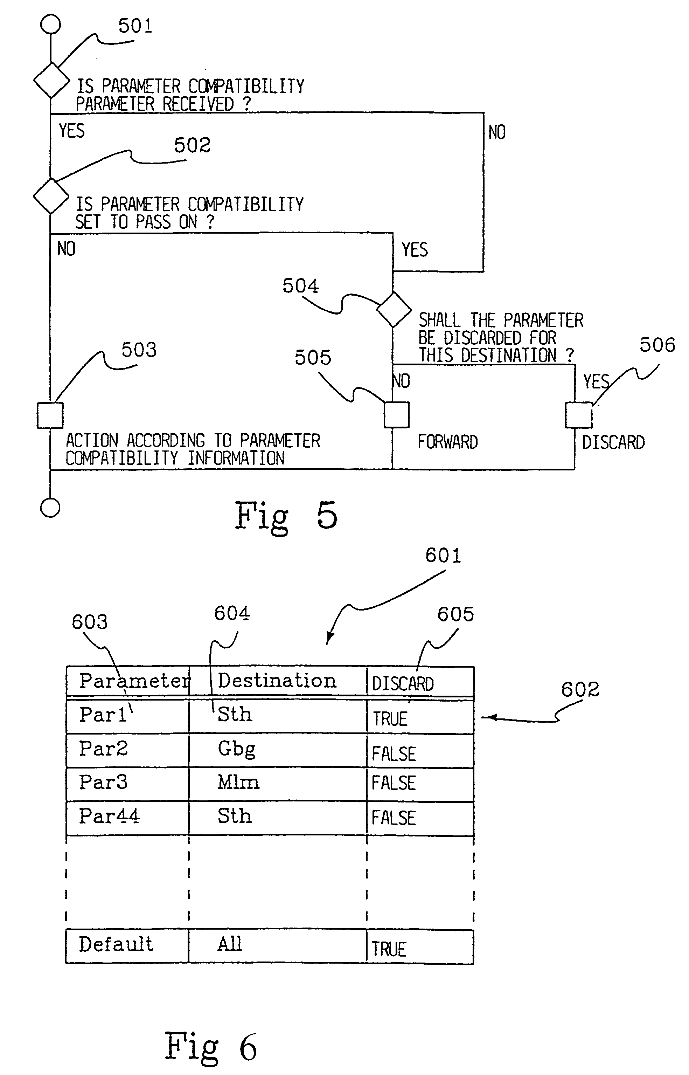

In this way it is determined in the gateway node 105 in Figure 1 if an unfamiliar message shall be forwarded to the network 103 via the gateway nodes 106 and 107. If the message is recognized in the gateway node 105 then the analysis with the parameters 302, 303 and 304 in Figure 3 which the message contains continues. If any of these is discovered to be unfamiliar then a similar method as for the unknown message according to Figure 5 occurs.

When a message arrives to the gateway node 105 in Figure 1 and it is discovered that a parameter is unfamiliar, then it is checked whether a parameter compatibility parameter, called PCP from now on, has been received 501 in Figure 5. The PCP belongs to the parameters in the variable part 304 of the ISUP message in Figure 3. PCP contains information on which actions a node shall take if the parameter concerned is not known to the node. If the PCP has not been received or if the PCP is set to a forwarding parameter 502, then it is checked if the parameter shall be forwarded 504 to the destination which the message is intended for. In other cases the action according to PCP 503 and 505 are taken. The information on whether the parameter should be forwarded or not for a given destination is held in a table 601 in Figure 6. Each input 602 in the table 601 contains information on the type of parameter 603, destination 604 and if it shall be forwarded or not 605. Even in this case interesting traffic information can be saved, for example the type of parameter, destination, etc.

That one type of flow diagram and table is shown for message and another type for parameters does not mean that the respective flow diagrams and tables are particularly intended for respective messages and parameters, but the intention is only to show two similar embodiments of the invention. The flow diagram and table for the message functions equally well together with parameters and vice versa.

The invention is naturally not limited to the above described, and shown on the drawings, embodiments, but can be modified within the scope of the accompanying claims.

## Claims

1. Method for preventing or allowing the conveyance of one or several messages in a specific protocol via a node in a network, which message comprises a first parameter comprising information regarding what type of message, in said specific protocol, is received in said node, wherein at least one of said messages comprises a second parameter with information about the destination for said messages,
**characterised in that**
said messages arrive at the node wherein said node comprises a first screening function which, depending on whether said type of message is recognised, calls upon a second screening function, which depending on said destination and said type of message performs an action.

2. Method according to Claim 1, where said message further comprises at least a third parameter, which third parameter contains information on the type of said third parameter, **characterized in that** said first screening function depending on whether said type of third parameter is recognized calls upon said second screening function, which depending on said destination and said type of third parameter performs an action.

3. Method according to Claim 2, **characterized in that** said second screening function comprises an action table (601), in which table (601) each entry (602) comprises the type of parameter (603), destination (604) and action (605), that new entries (602) in said table (601) are arranged to be added by an operator and that depending on said type of third parameter and said destination the corresponding action described in the table is taken.

4. Method according to Claim 3, **characterized in that** said action (602) described in the table (601) consists of to terminate said message, to forward said message, to forward said message with said third parameter excluded to modify said third parameter.

5. Method according to Claim 4, **characterized in that** a debiting function calculates the number of unfamiliar parameters and messages, stores the number of unfamiliar parameters and messages and stores traffic information related to said parameters and messages.

6. Method according to Claim 5, **characterized in that** the protocol which is used for said messages is ISUP (Integrated Services User Part), that the information on said type of message is carried in the field for "Message Type Code" (306), that said third parameter comprises a "Parameter Compatibility Parameter", that information on said destination is received through "Called Party Number" in the message IAM (Initial Address Message), that depending on whether the "Parameter Compatibility Parameter" has not been received or whether the Parameter Compatibility Parameter is set to "Pass On", the corresponding action described in said table (601) is taken.

7. Method according to Claim 1, **characterized in that** said second screening function comprises an action table (401), in which table (401) each entry (402) comprises the type of message (403), destination (404) and action (405) that new entries (402) in said table (401) are added by the operator and that, depending on said type of message (403) and said destination (404), the corresponding actions described in the table (401) are taken.

8. Method according to Claim 7, **characterized in that** said actions (405) can consist of to terminate said message, to forward said message or to modify said message.

9. Method according to Claim 8, **characterized in that** a debiting function counts the number of unfamiliar messages, stores the number of unfamiliar messages and stores traffic information related to said messages.

10. Method according to Claim 9, **characterized in that** the protocol which is used for said messages is ISUP (Integrated Services User Part), that information on said type of messages (306) is carried in the field for "Message Type Code", that said message comprises a "Messsage Compatibility Parameter" (307), that information on said destination is obtained through the "Called Party Number" in the message IAM (Initial Address Message), that depending on whether the "Message Compatibility Parameter" has not been received or if the "Message Compatibility Parameter" is set to "Pass On", an action according to said table (401) is taken.

11. Node in a network arranged for preventing or allowing the forwarding of messages and/or parameters using a specific protocol,
**characterised in that**
- said node comprises means for recognising a message or parameter,
- said node (105) comprises means for taking actions according to a table (401, 601),
- that each entry (402, 602) in said table at least contains the type of parameter (603) or message (403) received according to said specific protocol, the destination (404, 604) for said message or parameter and an action (405, 605),
- said node is arranged to take an action according to said table if said message or parameter is not recognised, and
- said table (401, 601) is arranged to be modified by an operator.

12. Node in a network according to Claim 11, **characterized in that** said actions (405, 605) are arranged to terminate said message or parameter, to forward said message or parameter, to forward said message with said third parameter excluded or to modify said message or parameter.

## Patentansprüche

1. Verfahren zum Verhindern oder Zulassen der Übermittlung einer oder mehrerer Nachrichten in einem spezifischen Protokoll über einen Knoten in einem Netz, wobei die Nachricht einen ersten Parameter umfasst, der eine Information dahingehend umfasst, welcher Typ einer Nachricht in dem spezifischen Protokoll in dem Knoten empfangen wird, wobei zumindest eine der Nachrichten einen zweiten Parameter mit einer Information über das Ziel für die Nachrichten umfasst,
**dadurch gekennzeichnet, dass**
die Nachrichten an dem Knoten ankommen, wobei der Knoten eine erste Aussiebungsfunktion umfasst, die in Abhängigkeit davon, ob der Typ der Nachricht erkannt wird, eine zweite Aussiebungsfunktion aufruft, die in Abhängigkeit von dem Ziel und dem Typ der Nachricht eine Aktion durchführt.

2. Verfahren nach Anspruch 1, wobei die Nachricht weiter zumindest einen dritten Parameter umfasst, wobei der dritte Parameter eine Information über den Typ des dritten Parameters enthält, **dadurch gekennzeichnet, dass** die erste Aussiebungsfunktion in Abhängigkeit davon, ob der Typ des dritten Parameters erkannt wird, die zweite Aussiebungsfunktion aufruft, die in Abhängigkeit von dem Ziel und dem Typ des dritten Parameters eine Aktion durchführt.

3. Verfahren nach Anspruch 2, **dadurch gekennzeichnet, dass** die zweite Aussiebungsfunktion eine Aktionstabelle (601) umfasst, wobei in der Tabelle (601) jeder Eintrag (602) den Typ des Parameters (603), ein Ziel (604) und eine Aktion (605) umfasst, dass neue Einträge (602) in der Tabelle (601) ausgelegt sind, von einem Operator hinzugefügt zu werden, und dass in Abhängigkeit von dem Typ des dritten Parameters und des Ziels die entsprechende Aktion, die in der Tabelle beschrieben ist, ausgeführt wird.

4. Verfahren nach Anspruch 3, **dadurch gekennzeichnet, dass** die Aktion (602), die in der Tabelle (601) beschrieben ist, darin besteht, die Nachricht zu beenden, die Nachricht zu übermitteln, und die Nachricht zu übermitteln, wobei der dritte Parameter ausgeschlossen ist, um den dritten Parameter zu modifizieren.

5. Verfahren nach Anspruch 4, **dadurch gekennzeichnet, dass** eine Belastungsfunktion die Anzahl fremdartiger Parameter und Nachrichten berechnet, die Anzahl fremdartiger Parameter und Nachrichten speichert und eine Verkehrsinformation, die sich auf die Parameter und Nachrichten bezieht, speichert.

6. Verfahren nach Anspruch 5, **dadurch gekennzeichnet, dass** das Protokoll, das für die Nachrichten verwendet wird, ISUP (Integrated Services User Part) ist, dass die Information über den Typ der Nachricht in dem Feld für "Nachrichtentypcode" (306) aufgenommen ist, dass der dritte Parameter einen "Parameter-Kompatibilitätsparameter" umfasst, das eine Information. über das Ziel über eine "Nummer einer angerufenen Partei" in der Nachrichten-IAM (Anfangsadressen-Nachricht) empfangen wird, dass in Abhängigkeit davon, ob der "Parameter-Kompatibilitätsparameter empfangen worden ist oder nicht, oder ob der Parameter-Kompatibilitätsparameter auf "Weiterleiten" gesetzt ist, die entsprechende Aktion, die in der Tabelle (601) beschrieben ist, ausgeführt wird.

7. Verfahren nach Anspruch 1, **dadurch gekennzeichnet, dass** die zweite Aussiebungsfunktion eine Aktionstabelle (401) umfasst, wobei in der Tabelle (401) jeder Eintrag (402) den Typ der Nachricht (403), das Ziel (404) und die Aktion (405) umfasst, dass neue Einträge (402) in der Tabelle (401) von dem Operator hinzugefügt werden, und dass, in Abhängigkeit von dem Typ der Nachricht (403) und dem Ziel (404), die entsprechenden Aktionen, die in der Tabelle (401) beschrieben sind, ausgeführt werden.

8. Verfahren nach Anspruch 7, **dadurch gekennzeichnet, dass** die Aktionen (405) daraus bestehen können, die Nachricht zu beenden, die Nachricht zu übermitteln oder die Nachricht zu modifizieren.

9. Verfahren nach Anspruch 8, **dadurch gekennzeichnet, dass** eine Berechnungsfunktion die Anzahl fremdartiger Nachrichten zählt, die Anzahl fremdartiger Nachrichten speichert und eine Verkehrsinformation, die sich auf die Nachrichten bezieht, speichert.

10. Verfahren nach Anspruch 9, **dadurch gekennzeichnet, dass** das Protokoll, das für die Nachrichten verwendet wird, ISUP (Integrated Services User Part) ist, dass eine Information über den Typ der Nachrichten (306) in dem Feld für "Nachrichtentyp-Code" aufgenommen ist, dass die Nachricht einen "Nachrichten-Kompatibilitätsparameter" (307) umfasst, dass eine Information über das Ziel durch die "Nummer der angerufenen Partei" in der Nachrichten-IAM (Initial Address Message, Anfangsadressennachricht) erhalten wird, dass in Abhängigkeit davon, ob der "Nachrichten-Kompatibilitätsparameter" nicht empfangen worden ist oder ob der "Nachrichten-Kompatibilitätsparameter" auf "Weiterleiten" gesetzt ist, eine Aktion gemäß der Tabelle (401) ausgeführt wird.

11. Knoten in einem Netz, ausgelegt zum Verhindern oder Zulassen des Übermittelns von Nachrichten und/oder Parametern unter Verwendung eines spezifischen Protokolls,
**dadurch gekennzeichnet, dass**
- der Knoten eine Einrichtung zum Erkennen einer Nachricht oder eines Parameters erfasst,
- der Knoten (105) eine Einrichtung zum Ausführen von Aktionen gemäß einer Tabelle (401, 601) umfasst,
- dass jeder Eintrag (402, 602) in der Tabelle zumindest den Typ des Parameters (603) oder der Nachricht (403), die gemäß dem spezifischen Protokoll empfangen werden, das Ziel (404, 604) für die Nachricht oder den Parameter und eine Aktion (406, 605) enthält,
- der Knoten ausgelegt ist, eine Aktion gemäß der Tabelle auszuführen, wenn die Nachricht oder der Parameter nicht erkannt wird, und
- die Tabelle (401, 601) ausgelegt ist, von einem Operator modifiziert zu werden.

12. Knoten in einem Netz nach Anspruch 11, **dadurch gekennzeichnet, dass** die Aktionen (405, 605) ausgelegt sind, die Nachricht oder den Parameter zu beenden, die Nachricht oder den Parameter zu übermitteln, die Nachricht zu übermitteln, wobei der dritte Parameter ausgeschlossen ist, oder die Nachricht oder den Parameter zu modifizieren.

## Revendications

1. Procédé pour empêcher ou autoriser le transport d'un ou plusieurs messages dans un protocole spécifique via un noeud dans un réseau, lequel message comprend un premier paramètre comprenant des informations concernant quel type de message, dans ledit protocole spécifique, est reçu dans ledit noeud, dans lequel au moins un desdits messages comprend un second paramètre avec des informations concernant la destination desdits messages,
**caractérisé en ce que**
lesdits messages arrivent au noeud dans lequel ledit noeud comprend une première fonction de filtrage qui, en fonction du type de message qu'il reconnaît, appelle une seconde fonction de filtrage qui, en fonction de ladite destination et dudit type de message, exécute une action.

2. Procédé selon la revendication 1, dans lequel ledit message comprend, en outre, au moins un troisième paramètre, lequel troisième paramètre contient des informations sur le type dudit troisième paramètre, **caractérisé en ce que** ladite première fonction de filtrage dépend de la question de savoir si ledit type de troisième paramètre qui est reconnu, appelle ladite seconde fonction de filtrage, laquelle fonction dépend de ladite destination et ledit type de troisième paramètre exécute une action.

3. Procédé selon la revendication 2, **caractérisé en ce que** ladite seconde fonction de filtrage comprend une table d'action (601), dans laquelle table (601) chaque entrée (602) comprend le type de paramètre (603), la destination (604) et l'action (605), **en ce que** de nouvelles entrées (602) dans ladite table (601) sont conçues pour être ajoutées par un opérateur et **en ce qu'**en fonction dudit type du troisième paramètre et de ladite destination, l'action correspondante décrite dans la table est prise.

4. Procédé selon la revendication 3, **caractérisé en ce que** ladite action (602) décrite dans la table (601) consiste à terminer ledit message, à transmettre ledit message, à transmettre ledit message avec ledit troisième paramètre exclu pour modifier ledit troisième paramètre.

5. Procédé selon la revendication 4, **caractérisé en ce qu'**une fonction de débit calcule le nombre de paramètres et messages inhabituels, mémorise le nombre des paramètres et messages inhabituels et mémorise les informations de trafic liées aux dits paramètres et messages.

6. Procédé selon la revendication 5, **caractérisé en ce que** le protocole qui est utilisé pour lesdits messages est ISUP (Partie d'Utilisateur à Services Intégrés), **en ce que** les informations concernant ledit type de message sont transportées dans la zone pour "Code du Type de Message" (306), **en ce que** ledit troisième paramètre comprend un "Paramètre de Compatibilité de Paramètre", **en ce que** les informations concernant ladite destination sont reçues par l'intermédiaire du "Numéro de Destinataire Appelé" dans le message IAM (Message d'Adresse Initial), **en ce qu'**en fonction du fait que le "Paramètre de Compatibilité de Paramètre" n'a pas été reçu ou si le Paramètre de Compatibilité de Paramètre est réglé sur "Passer", l'action correspondante décrite dans ladite table (601) est prise.

7. Procédé selon la revendication 1, **caractérisé en ce que** ladite seconde fonction de filtrage comprend une table d'action (401), dans laquelle table (401) chaque entrée (402) comprend le type de message (403), la destination (404) et l'action (405), **en ce que** de nouvelles entrées (402) dans ladite table (401) sont ajoutées par l'opérateur et **en ce que**, en fonction dudit type de message (403) et de ladite destination (404), les actions correspondantes décrites dans la table (401) sont prises.

8. Procédé selon la revendication 7, **caractérisé en ce que** lesdites actions (405) peuvent consister à terminer ledit message, à envoyer ledit message ou à modifier ledit message.

9. Procédé selon la revendication 8, **caractérisé en ce qu'**une fonction de débit compte le nombre des messages inhabituels, mémorise le nombre des messages inhabituels et mémorise les informations de trafic liées aux dits messages.

10. Procédé selon la revendication 9, **caractérisé en ce que** le protocole qui est utilisé pour lesdits messages est ISUP (Partie d'Utilisateur à Services Intégrés), **en ce que** les informations sur ledit type de messages (306) sont transportées dans la zone pour "Code du Type de Message", **en ce que** ledit message comprend un "Paramètre de Compatibilité de Message" (307), **en ce que** les informations concernant ladite destination sont obtenues par l'intermédiaire du "Numéro de Destinataire Appelé" dans le message IAM (Message d'Adresse Initial), **en ce qu'**en fonction du fait que le "Paramètre de Compatibilité de Message" n'a pas été reçu ou si le "Paramètre de Compatibilité de Message" est réglé sur "Passer", une action en conformité avec ladite table (401) est prise.

11. Noeud dans un réseau conçu pour empêcher ou autoriser la transmission de messages et/ou de paramètres en utilisant un protocole spécifique,
**caractérisé en ce que**
- ledit noeud comprend un moyen pour reconnaître un message ou un paramètre,
- ledit noeud (105) comprend un moyen pour prendre des actions en conformité avec une table (401, 601),
- **en ce que** chaque entrée (402, 602) dans ladite table contient au moins le type de paramètre (603) ou de message (403) reçu en conformité avec ledit protocole spécifique, la destination (404, 604) dudit message ou dudit paramètre et une action (405, 605),
- ledit noeud est conçu pour prendre une action en conformité avec ladite table si ledit message ou paramètre n'est pas reconnu, et
- ladite table (401, 601) est conçue pour être modifiée par un opérateur.

12. Noeud dans un réseau selon la revendication 11, **caractérisé en ce que** lesdites actions (405, 605) sont conçues pour terminer ledit message ou paramètre, pour transmettre ledit message ou paramètre, pour transmettre ledit message avec ledit troisième paramètre exclu ou pour modifier ledit message ou paramètre.
